# EUROPEAN PATENT APPLICATION

(11) **EP 1 463 252 A1**
(43) Date of publication of application: **29.09.2004**
(21) Application number: 04251187.3
(22) Date of filing: 02.03.2004
(51) Int. Cl.: H04L 25/02

(54) **Wireless communication system**

(30) Priority: 27.03.2003 GB 0307088
(71) Applicant: Ubinetics Limited, Melbourn, Hertfordshire SG8 6DP (GB)
(72) Inventor: Tanner, Rudolph, Bishops Stortford, CM23 3HN (GB)
(74) Representative: Pratt, David Martin

(57) **Abstract**

A method of predicting the state of a channel of a mobile communications device comprises choosing one of a plurality of prediction algorithms in dependence upon a predetermined parameter of a signal received by the mobile communications device; and using the chosen prediction algorithm to predict the state of the channel at a predetermined time in the future.

## Description

This invention relates to a method of increasing the network capacity of a mobile communications system, and in particular to a method for improving the predictability of a time-varying medium in a mobile telecommunications system.

Recent advances in mobile telecommunications allow the utilisation of a greater portion of the available channel capacity in a wireless system, such as the Universal Mobile Telephone System (UMTS) also known as 3G. Using higher order modulation, such as 64-QAM, for example, increases the number of transmitted bits (transmitter capacity) when compared to traditional schemes employing Gaussian Minimum Frequency Shift Keying (GMSK) or Quadrature Phase Shift Keying (QPSK). However, the cost paid for a fixed bit error ratio is an increase in transmitter power, which is required in order to achieve the higher signal-to-noise ratio (SNR) required at the receiver, as the constellation points are closer spaced. Thus, increasing the transmitter capacity results in an increase in the transmitted signal power. This, in turn, leads to additional interference and noise, and reduces the SNR at the receivers of other users in a mobile network. Consequently, the transmit power of those users has to be increased to compensate for the additional interference and noise, and this leads to a further increase in the interference within the cell, thereby resulting in a reduction in cell capacity of the mobile network.

The capacity and the performance of a wireless network is also subjected to the state of the time-varying medium, otherwise known as the fading channel. Thus, if the channel state is poor, the received signal is very weak because the channel is in a fade, that is to say the signal is attenuated. The channel capacity can be computed using Shannon's well known formulae, which state that the channel capacity is a function of the SNR. In this connection, the channel capacity is the limiting factor, because increasing the transmitter capacity yields an increase in bit errors. In essence, the maximum error-free bit throughput is obtained by setting the transmitter capacity equal to the channel capacity.

Increasing the network capacity of a mobile telecommunications network can be achieved by known methods such as adaptive modulation, water-pouring or multi-user diversity. With adaptive modulation, if a receiver is telling a transmitter its SNR value, the transmitter chooses a modulation scheme which yields a high transmitter capacity. For example, dependent on the level SNR value, the transmitter chooses 8-PSK, 16-QAM or a higher modulation scheme, and may also adapt the transmitter power.

Multi-user diversity is a method used in cellular systems, where users (mobile devices) requesting data are served during the times when the channel state is good. This may require a scheduling process at the transmitter (the base station). More important, however, is that not every user can be served immediately, and hence the channel state of each user needs, for an efficient system, to be predicted ahead in time. Thus, the maximum network capacity which multi-user diversity can achieve is dependent on the quality of the predictive channel.

The aim of the invention is to provide an improved method of predicting the channel state of a cellular mobile telecommunications system.

The present invention provides a method of predicting the state of a channel of a mobile communications device, the method comprising the steps of:
a) choosing one of a plurality of prediction algorithms in dependence upon a predetermined parameter of a signal received by the mobile communications device; and
b) using the chosen prediction algorithm to predict the state of the channel at a predetermined time in the future.
Advantageously, the predetermined parameter is the Doppler frequency of the received signal. In this case, the method may further comprise the step of segmenting the Doppler frequency spectrum of the received signal into a plurality of bands, each band having associated therewith a respective one of the prediction algorithms.

Alternatively, the predetermined parameter is the speed of the mobile communications device. In this case, the speed of the mobile communications device can be linked to the Doppler frequency.

In a preferred embodiment, the method further comprises the steps of:
c) defining a vector from a continuous stream of complex numbered channel state information (CSI) samples in the received signal;
d) storing the vector in a memory of the mobile communications device;
e) using the chosen predicted algorithm to read the vector; and
f) outputting the predicted channel state at said predetermined time in the future.

Preferably, where the predetermined time in the future is the time of the next CSI sample, step f) outputs the predicted channel state as the value of the next CSI sample predicted by the chosen prediction algorithm. Alternatively, where the predetermined time in the future is N samples in the future, the vector stored in step d) is updated (N-1) times, and the predicted channel state is the value of the CSI sample predicted by the chosen prediction algorithm after said updates. In the latter case, the (N-1) updating steps may be carried out by:-
g) feeding the output of step f) into the memory to update the vector;
h) using the chosen prediction algorithm to read the updated vector;
i) outputting the value of the predicted next CSI sample; and repeating steps g) to i) until (N-1) updates have occurred.

The invention also provides a mobile communications device having a channel predictor for predicting the state of the communications channel, the channel predictor comprising:
a) processing means for choosing one of a plurality of channel state prediction algorithms in dependence upon a predetermined parameter of a signal received by the mobile communications device; and
b) means for running the chosen prediction algorithm to predict the state of the channel at a predetermined time in the future.

Advantageously, the predetermined parameter is the Doppler frequency, and the device further comprises a Doppler estimator for estimating the Doppler frequency of the received signal. In this case, the Doppler estimator is such as to segment the Doppler frequency spectrum of the received signal into a plurality of bands, each of said bands having associated therewith a respective one of the prediction algorithms.

In a preferred embodiment, the processing means includes means for defining a vector from a continuous stream of CSI samples in the received signal, means for storing the vector in a memory of the device, means for using the chosen predicted algorithm to read the vector, and means for outputting the predicted channel state at said predetermined time in the future.

Preferably, where the predetermined time in the future is the time of the next CSI sample, the processing means is such as to output the predicted channel state as the value of the next CSI sample predicted by the chosen prediction algorithm. Alternatively, where the predetermined time in the future is N samples in the future, the processing means is such that the vector stored in the memory is updated (N-1) times, and such that the predicted channel state is the value of the CSI sample predicted by the chosen prediction algorithm after said updates.

The invention will now be described in greater detail, by way of example, with reference to the drawings, in which:-
Figure 1 is a block diagram of a mobile terminal of a cellular mobile telecommunications system;
Figure 2 is a block diagram of an adaptive predictor forming part of the mobile terminal of Figure 1; and
Figure 3 is a graph illustrating the selection process of the channel predictor of Figure 2.

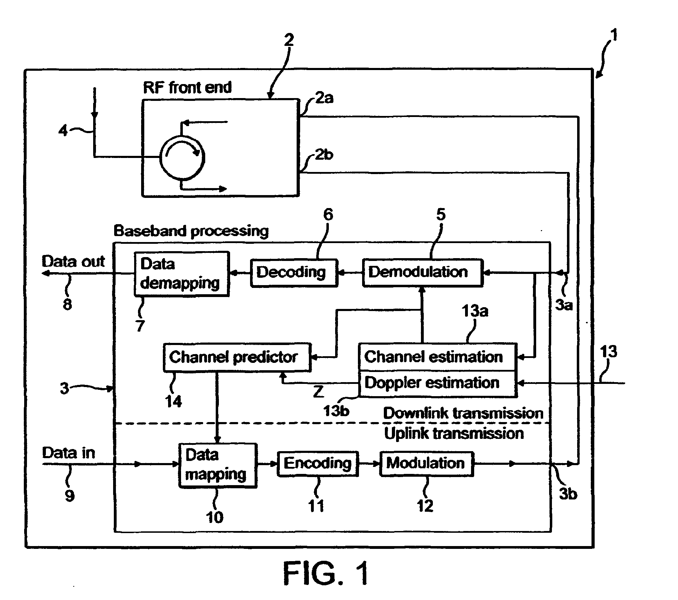

Referring to the drawings, Figure 1 shows schematically a mobile terminal 1 of a cellular mobile telecommunications system. The mobile terminal 1 includes a radio frequency (rf) front end 2 and a baseband processing unit 3. The rf front end 2 has an antenna 4 for receiving and transmitting signals, an input 2a for sending signals to another receiver, which signals are provided from an output 3b of the baseband processing unit 3, and an input 3a for receiving signals from an output 2b of the rf front end.

Signals entering the baseband processing unit 3 via the input 3 a pass to a demodulation unit 5. The output of the demodulation unit 5 passes to a decoding unit 6, and then to a data de-mapping unit 7. The data output, at 8, by the de-mapping unit 7 passes to the loudspeaker (not shown) of the earpiece (not shown) of the mobile terminal 1, or to any recipient to which the data is to be forwarded (e.g to higher layers). Voice data from the microphone (not shown) of the mobile terminal (or other data) enters the baseband processing unit 3, at 9, and passes to a data mapping unit 10. The output of the data mapping unit 10 passes to an encoding unit 11, and then to a modulation unit 12. The output of the modulation unit 12 passes from the output 3b of the baseband processing unit 3 to the input 2a of the rf front end 2 for transmission to a base station (not shown) of the mobile telecommunications system. The baseband processing unit 3 as described above is conventional.

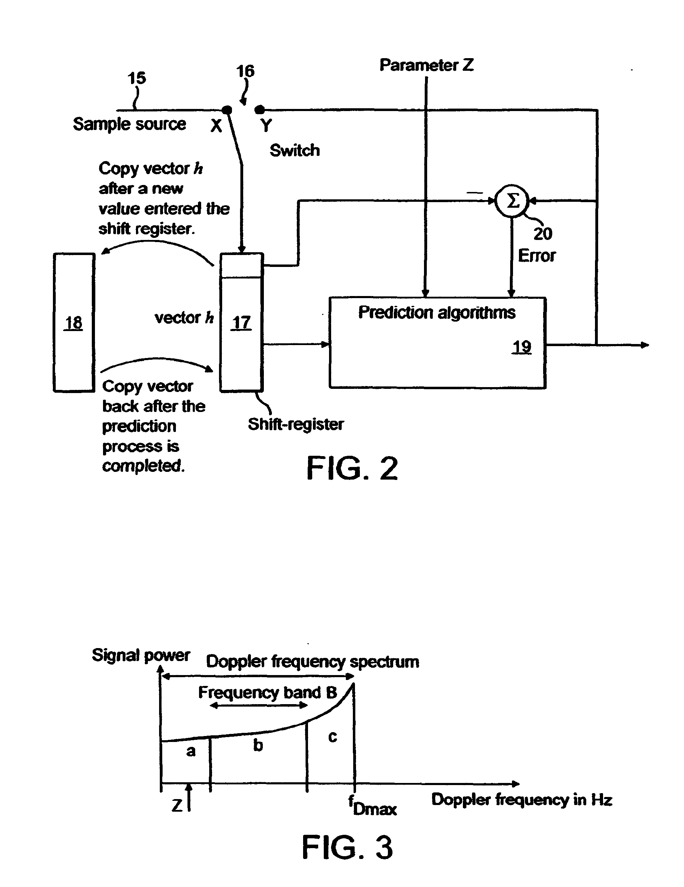

The baseband processing unit 3 does, however, include further components for implementing the invention. In particular, signals entering the unit 3 via the input 3a also pass to an estimation block 13 which includes a channel estimation block 13a and a Doppler frequency estimation block 13b, the outputs of both of which are passed to a channel predictor 14, which will be described below in greater detail with reference to Figure 2. The output of the channel estimation block 13a also passes to the demodulation unit 5. The output of the channel predictor 14 passes to the data mapping unit 9, which outputs the predicted channel state, together with mapped data from the microphone, to the encoding unit 11 then to the modulation unit 12, and then to the (rf) front end 2.

In this way, the output of the channel predictor 14 is relayed back either directly or indirectly to a base station of the mobile telecommunications system. In this connection, the term "direct" means that the output is transmitted back to the base station in its original form, while the term "indirect" means that the output is used to calculate another metric, for example from a look-up-table (LUT), which is then returned to the base station. This latter term, obtained from a LUT, is termed a channel quality indicator (CQI) in the UMTS community, though other terms may be used.

When the mobile terminal 1 receives a signal at the antenna 4, this is processed in the rf front end 2. The output of the rf front end 2 is a digital representation of the analogue signal received at the antenna 4. The digitised samples are fed into the baseband processing unit 3 as mentioned above. Here, it should be noted that a system-specific number of samples represents one frame worth of data, and that a frame worth of data comprises the actual information bits (the data), redundancy bits due to channel coding, control bits and possibly other system-related bits which are used to make the system work. The demodulation unit 5 demodulates the stream of samples in order to arrive at the soft-decisions required for successfully decoding a frame. The subsequent de-mapping unit 7 extracts different types of bits in a frame, for example, the information bits and the control bits. However, because of the provision of the estimation block 13 and the channel predictor 14, the demodulation unit 5 requires an output from the channel estimation block 13a for successfully demodulating the received samples.

The operation of the channel predictor 14 will now be described with reference to Figure 2. The channel predictor 14 has an input 15, a switch 16, first and second shift registers 17 and 18, a processor 19 and an adder 20. The processor 19 contains software including a plurality of prediction algorithms - typically three algorithms A, B and C as will be explained below with reference to Figure 3. The algorithms may be of the type described in the paper by Rudolph Tanner and Witold Krzymien. "A Comparison of Fading Channel State Prediction Techniques", Conference Proceedings of Wireless 02, Calgery, Vol. I, pp 312-317, 2002. Alternatively, those algorithms could be replaced by any other algorithms that can predict the future state of a time series.

A continuous stream of complex numbered channel state information (CSI) samples *ĥ* is produced by the channel estimation block 13a and enters the predictor 14 via the input 15. Vector **h** = [*ĥ*_{*i*+*1*},*ĥ*_{*i*+*2*},...,*ĥ*_{*i*-*M*+*1*}] ^{*T*} denotes a CSI set with *M* samples and the *T* vector transpose. Sample *ĥ*_{*i*} denotes the latest CSI and *ĥ*_{*i-M*}_{+*1*} the oldest sample. The predictor 14 exploits the information contained in **h** and computes, using one of any suitable known methods, the next CSI denoted *ĥ*_{*i*+*1*}.

Thus, the channel estimation block 13a feeds, at time *t*, the latest CSI *ĥ,* via the switch 16 which is in position X, into the shift register 17 which contains the vector **h**. The processor 19 reads **h**, and chooses one of the algorithms available, e.g the algorithm A. The algorithm selection process is governed by the value of the parameter Z, the parameter Z being the output of the Doppler estimation block 13b. The rule is such that the best prediction algorithm is chosen with respect to the value of Z. The system will also make a local copy, into the shift register 18, of **h** for future use.

The prediction algorithm A outputs the predicted next sample value ĥ, which in turn can be used to compute an error in order to update, train or adapt a prediction algorithm within the processor 19.

Now, if the predictor 14 needs to predict the CSI more than one sample ahead in time, the switch 16 is moved into position Y. The output of the processor 19 is then fed back into the input, and the whole prediction system works in an iterative fashion until the sample nearest to the wanted prediction time has been computed. For example, if the CSI sampling rate is 1ms, and we need to predict 30ms ahead in time, then the iterative loop will be executed 29 times.

Once the wanted future sample has been predicted, the system needs to be reinitialised. At the end of the prediction process, the shift register 17 will be flushed, and the locally-stored (in the shift register 18) value of h will be loaded into the shift register 17 from the shift register 18. Then, the switch 16 will be returned into position X, and the latest CSI loaded or shifted in the shift register 17.

The way in which a prediction algorithm is chosen will now be described with reference to Figure 3, which is a graph plotting signal power against Doppler frequency. The maximum expected Doppler frequency (for example 100 Hz) is denoted by f_{Dmax}, and the entire Doppler frequency spectrum is segmented into three bands designated a, b and c. Each of these bands is designated for a respective prediction algorithm A, B and C. For the purpose of illustration, the Doppler frequency estimated by the Doppler estimation block 13b is assumed to be Z Hz (the parameter Z). As can be seen in Figure 3, the adaptive predictor 14 would select prediction algorithm A, because Z lies within the band a, where the prediction algorithm A performs best within the frequency band a. The way in which the Doppler frequency spectrum is segmented forms part of a system design study, which simulates the optimum bandwidth for each prediction algorithm. This knowledge, of when to employ which prediction algorithm, is then "hard-coded" into the channel predictor 14.

It will be apparent that modifications could be made to the mobile telecommunications device described above. For example, instead of using a Doppler frequency estimate for the parameter Z, a speed sensor or any other figure which helps to select the best of the prediction algorithms can be used. Moreover, instead of using a dedicated channel estimation block, it would also be possible to obtain the channel estimates via other means, for example, by a joint decoding and channel estimation block. Where the mobile communications device forms part of a CDMA based mobile telecommunications system, the demodulation unit 5 may be a rake receiver, but other types of demodulator could also be used, particularly where the system is not a CDMA system.

It will be apparent that the channel predication scheme of the invention leads to an improved quality of the predicted channel state and the SNR, and hence to increased network capacity. Moreover, for each possible scenario where the Doppler frequency changes, the most suitable predication algorithm is employed in order to improve the quality of the future state of the channel. Moreover, the algorithms employed are easy to implement, because they require no frequent computation of a matrix inverse, since, where a matrix inverse is required, this can be stored in a look-up table.

The invention can be used whenever prediction is required in a communications system, or where SNR prediction is required. The invention finds particular use in high-speed-data (HDR) and high-speed-data-packet-access (HSDPA) services in CDMA 2000 networks and WCDMA (UMTS) networks respectively. The invention also finds use in closed-loop power control systems and-time-coding based systems where prediction is required.

## Claims

1. A method of predicting the state of a channel of a mobile communications device, the method comprising the steps of:
a) choosing one of a plurality of prediction algorithms in dependence upon a predetermined parameter of a signal received by the mobile communications device; and
b) using the chosen prediction algorithm to predict the state of the channel at a predetermined time in the future.

2. A method as claimed in claim 1, wherein the predetermined parameter is the Doppler frequency of the received signal.

3. A method as claimed in claim 2, further comprising the step of segmenting the Doppler frequency spectrum of the received signal into a plurality of bands, each band having associated therewith a respective one of the prediction algorithms.

4. A method as claimed in claim 1, wherein the predetermined parameter is the speed of the mobile communications device.

5. A method as claimed in any one of claims 1 to 4, further comprising the steps of:
c) defining a vector from a continuous stream of complex numbered channel state information (CSI) samples in the received signal;
d) storing the vector in a memory of the mobile communications device;
e) using the chosen predicted algorithm to read the vector; and
f) outputting the predicted channel state at said predetermined time in the future.

6. A method as claimed in claim 5, wherein, where the predetermined time in the future is the time of the next CSI sample, step f) outputs the predicted channel state as the value of the next CSI sample predicted by the chosen prediction algorithm.

7. A method as claimed in claim 5, wherein, where the predetermined time in the future is N samples in the future, the vector stored in step d) is updated (N-1) times, and the predicted channel state is the value of the CSI sample predicted by the chosen prediction algorithm after said updates.

8. A method as claimed in claim 7, wherein the (N-1) updating steps are carried out by:-
g) feeding the output of step f) into the memory to update the vector;
h) using the chosen prediction algorithm to read the updated vector;
i) outputting the value of the predicted next CSI sample; and repeating steps g) to i) until (N-1) updates have occurred.

9. A mobile communications device having a channel predictor for predicting the state of the communications channel, the channel predictor comprising:
a) processing means for choosing one of a plurality of channel state prediction algorithms in dependence upon a predetermined parameter of a signal received by the mobile communications device; and
b) means for running the chosen prediction algorithm to predict the state of the channel at a predetermined time in the future.

10. A device as claimed in claim 9, wherein the predetermined parameter is the Doppler frequency, and the device further comprises a Doppler estimator for estimating the Doppler frequency of the received signal.

11. A device as claimed in claim 10, wherein the Doppler estimator is such as to segment the Doppler frequency spectrum of the received signal into a plurality of bands, each of said bands having associated therewith a respective one of the prediction algorithms.

12. A device as claimed in claim 9, wherein the predetermined parameter is the speed of the mobile communications device.

13. A device as claimed in any one of claims 9 to 12, wherein the processing means includes means for defining a vector from a continuous stream of CSI samples in the received signal, means for storing the vector in a memory of the device, means for using the chosen predicted algorithm to read the vector, and means for outputting the predicted channel state at said predetermined time in the future.

14. A device as claimed in claim 13, wherein, where the predetermined time in the future is the time of the next CSI sample, the processing means is such as to output the predicted channel state as the value of the next CSI sample predicted by the chosen prediction algorithm.

15. A device as claimed in claim 13, wherein, where the predetermined time in the future is N samples in the future, the processing means is such that the vector stored in the memory is updated (N-1) times, and such that the predicted channel state is the value of the CSI sample predicted by the chosen prediction algorithm after said updates.
